# EUROPEAN PATENT SPECIFICATION

(11) **EP 4 678 816 B1**
(45) Date of publication and mention of the grant of the patent: **29.04.2026**
(21) Application number: 25184448.6
(22) Date of filing: 23.06.2025
(51) Int. Cl.: E01B 9/18, F16B 13/02, F16B 13/12, F16B 33/02, F16B 37/12, F16B 39/10

(54) **SLEEVE FOR FASTENING RAILWAY RAILS**
HÜLSE ZUR BEFESTIGUNG VON EISENBAHNSCHIENEN
MANCHON DE FIXATION DE RAILS DE CHEMIN DE FER

(30) Priority: 11.07.2024 ES 202430585
(43) Date of publication of application: 14.01.2026
(73) Proprietor: Hispanica de Componentes, S.L., 29016 Málaga Málaga (ES)
(72) Inventor: LOPEZ MATA, Jose Antonio, 29016 Málaga (ES)
(74) Representative: Capitán García, Maria Nuria

(56) References cited:
- ES-T3- 2 571 941
- ES-T3- 2 621 388

## Description

### FIELD OF THE INVENTION

This invention relates to a sleeve or bracket used in railway track fixation on surfaces or solid ground, such as a concrete sleeper or slab track.

### BACKGROUND OF THE INVENTION

Currently, railway track fixation systems, both for ballasted tracks and slab tracks, comprise different elements, each of which has its own particular function in ensuring the fixation and alignment of the rail, with the unique feature that this fixation must absorb and transmit the vibrations and stresses produced by the passage of rolling stock, i.e. the railway transport system, to the sleeper or slab track.

One of these elements is the familiar plastic sleeve or bracket used as a transition between two other elements of the rail fastening system, namely the lag screw and the solid ground to which the rail is fastened, wherein the materials of each, typically steel and concrete respectively, have very different characteristics and stresses.

The transmission of stresses from the rolling stock to the various components involved in the fixation is usually taken into account in the calculations for these railway track fixation systems, with the sleeve being relegated to a secondary position as a component of the fastening system, without much consideration being given to its interaction with the concrete in which it is installed. This is despite the fact that it is a plastic component with characteristics that are very different from the materials of its surrounding elements, particularly the dimensional variations that the sleeve is subject to due to the weather conditions it will face during its service life.

For example, document ES 2196099 T3 shows a plastic threaded sleeve or block used to fix a rail to a concrete crossbar, which has the disadvantage of having a very thin wall and therefore transmitting vibrations directly from the steel of the lag screw to the solid ground formed by the crossbar, while the plug itself would eventually break due to the stresses caused by its own weakness. Furthermore, due to the low elasticity modulus (Young's modulus) of the sleeve material, excessive deformation of its outer surface causes vertical displacement of the screw, or may even lead to its accidental removal.

On the other hand, a very thick wall shell and high modulus of elasticity cause considerable stress to be transferred to the solid ground simply due to the action of weathering agents and differential deformations between the shell and the solid ground where the shell is inserted. It should be noted that the thermal expansion coefficient of thermoplastics is approximately 10 times higher than that of concrete, as stated in document ES 2571941 T3.

Similarly, a high Young's modulus in the sleeve material causes the internal thread of the sleeve to fail to adapt to variations in the lag screw due to thread tolerances between the lag screw and the sleeve, leading to breakage of the internal thread of the sleeve before the lag screw reaches its strength limit. It can also cause the sleeve to transfer vibrations to the solid ground without any attenuation.

In addition, unexpected actions that exceed the conditions of use of the fixation system may lead to the breakage of components within the fixation system, including the sleeve, for example due to excessive tightening.

For all these reasons, ways of replacing the sleeve are commonly devised when necessary, for example, as shown in document ES 2621388T3, which is aimed at replacing the sleeve on the railway track when it is damaged or needs to be replaced. This is essential in order to avoid having to undertake much more costly and time-consuming actions.

Therefore, there is a need for a simple and economical alternative sleeve design for fixing railway rails that facilitates their replacement when required.

### DESCRIPTION OF THE INVENTION

The present invention is established and characterised in the independent claims, while the dependent claims describe additional characteristics thereof.

The object of the invention is a sleeve for fixing railway rails, which is adapted to contain a lag screw for fixing a rail to a solid surface, such as a concrete sleeper or slab track. The sleeve includes a substantially tubular sleeve body which, in a screwing-in direction of the sleeve into solid ground, comprises a crown section, an upper cylindrical shank section, a helical section and a lower cylindrical shank section.

The helical section comprises a truncated cone-shaped outer projection, configured as an external thread that is adapted to screw/unscrew the sleeve into solid ground, and an inner recess, configured as an internal thread that is adapted to screw/unscrew the lag screw into the sleeve.

Additionally, a base surface of the outer projection of the helical section forms an angle with respect to a vertical line that is parallel to a longitudinal axis of the sleeve body. In which, the value of said angle, formed between the base surface of the outer projection and the vertical line progressively increases helically in the screwing-in direction, preferably along the entire length of the helical section. For example, from a minimum angle value of approximately 90° to approximately 95°, corresponding to the start of the helical section following the upper cylindrical shank section, to a maximum angle value of approximately 130° to approximately 145°, corresponding to the end of the helical section before the lower cylindrical shank section. In any case, it is preferable that the ratio between the minimum angle value and the maximum angle value be between 0.1 and 0.67.

This makes it easier to screw the sleeve into solid ground, whether on a concrete sleeper or slab track. As is well known, the deeper the penetration, the more radial the stress transmission, and thanks to the particular configuration of the external protrusion in the form of an external thread on the helical section, this radial stress transmission is more easily overcome, facilitating both the screwing and unscrewing of the sleeve into solid ground.

Similarly, when the sleeve is in use, i.e. when it is screwed into solid ground as part of the railway track fixation system, the particular configuration given to the external projection in the form of an external thread on its helical section also reduces the concentration of load transmission to the concrete, thus reducing the possibility of cracks or fissures appearing in the concrete due to these loads.

### BRIEF DESCRIPTION OF THE DRAWINGS

The present document is complemented with a set of drawings as an example for illustrating the preferred embodiment, and which in no way limits the invention.
Figure 1 shows a front view of the rail fixation sleeve.
Figure 2 is an enlarged detail of Figure 1, showing the crown and upper cylindrical shank sections of the sleeve body.
Figure 3 represents a frontal cut-away view of the sleeve in Figure 1 rotated 90° with respect to its longitudinal axis, adopting a horizontal arrangement.
Figure 4 is an enlarged cutaway detail of Figure 3, showing the crown and upper cylindrical shank sections of the sleeve body.
Figure 5 is an enlarged cutaway detail of Figure 3, showing part of the helical section and the lower cylindrical shank section of the sleeve body.
Figure 6 shows a front view of the sleeve in Figure 1, which illustrates the load transfer mechanism to the concrete along its helical section.

### DETAILED DESCRIPTION OF THE INVENTION

The invention is a sleeve for fixing railway rails, which is adapted to contain a lag screw for fixing a rail to a solid surface, such as a concrete sleeper or slab track .

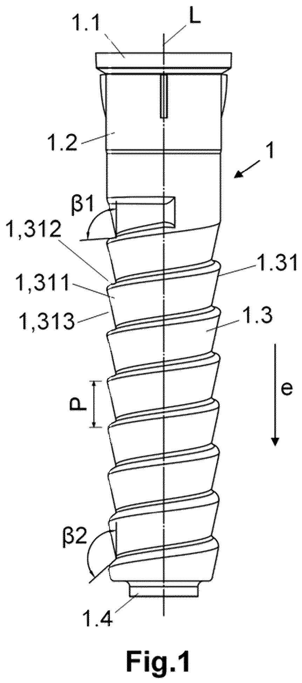

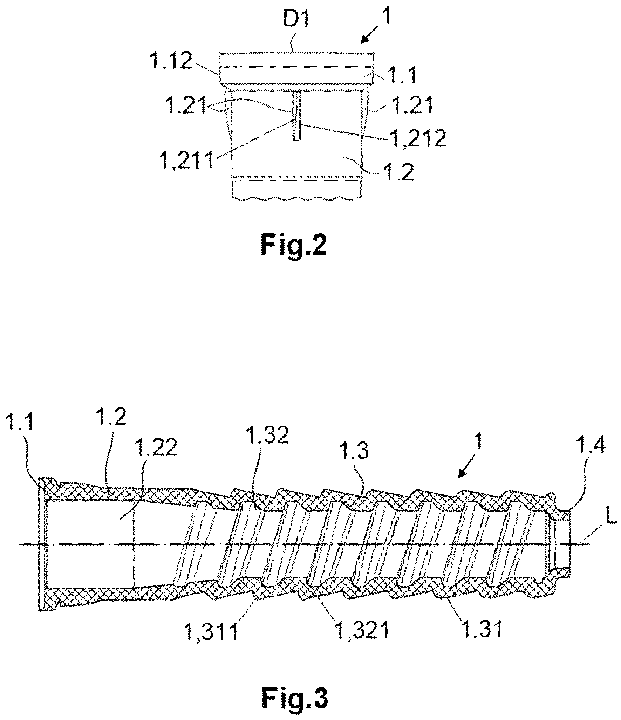

As shown in Figures 1 and 3, the sleeve includes a substantially tubular sleeve body (1), preferably with a total length of between 25 and 35 mm less than the length of the lag screw (not shown in the figures) to be installed in the sleeve for fixing to solid ground (not shown in the figures). Said sleeve body (1) should preferably be made of a thermoplastic material, for example, but not limited to, polyoxymethylene (POM), polyamide (PA), polyvinyl chloride (PVC), polybutylene terephthalate (PBT), polyetheretherketone (PEEK), polyetherketoneketone (PEKK), and polypropylene (PP). In any case, with a modulus of elasticity of between approximately 3,000 MPa and approximately 5,000 MPa, under conditions of temperature between approximately 20°C and approximately 25°C, and humidity less than 0.2%.

Thus, using the sleeve prevents the formation of cracks or fissures in the solid concrete floor due to climatic variations and increases the duration of the optimum tightening torque of the lag screw. Furthermore, in the event of the fastener breaking, damage to the concrete is prevented by generating a ductile break, which usually causes the lag screw to break before the sleeve.

Wherein, in a screwing-in direction (e) of the sleeve into solid ground, the sleeve body (1) comprises a crown section (1.1), followed by an upper cylindrical shank section (1.2), followed by a helical section (1.3) and finally followed by a lower cylindrical shank section (1.4) forming the tip of the sleeve.

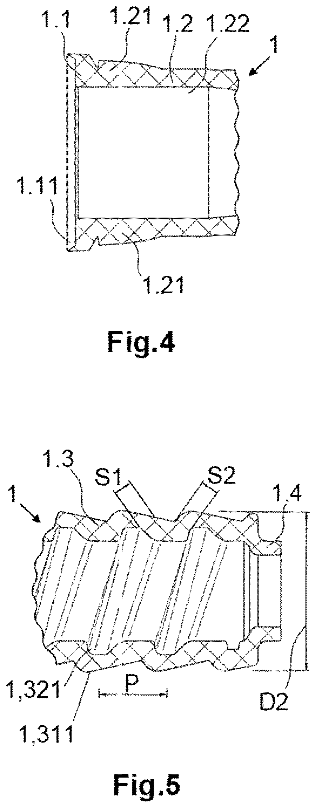

The crown section (1.1) should preferably be adapted to couple an assembly tool (not shown in the figures) for the sleeve in solid ground. As shown in Figure 4, the crown section (1.1) could comprise an inner wall (1.11) adapted to tightly house the assembly tool. For example, said interior wall (1.11) could be shaped like a triangular ring.

Additionally, as shown in Figure 2, the crown section (1.1) of the sleeve body (1) may comprise a truncated conical outer wall (1.12) with a first outer diameter (D1) that decreases in the screwing-in direction (e).

On the other hand, as shown in Figure 5, the helical section (1.3) could also have a truncated cone-shaped outer form with a second outer diameter (D2) that decreases in the screwing-in direction (e).

Preferably, the first outer diameter (D1) of the truncated cone-shaped outer wall (1.12) of the crown section (1.1) is greater than the second outer diameter (D2) of the truncated cone-shaped outer form of the helical section (1.3). This makes it easier to remove the sleeve from solid ground.

On the other hand, as shown in Figure 1, the helical section (1.3) of the sleeve body (1) comprises a truncated cone-shaped outer projection (1.31), configured as an external thread (1.311) which is adapted to screw/unscrew the sleeve into solid ground. Likewise, as shown in Figure 3, the helical section (1.3) also comprises an inner recess (1.32), which is configured as an internal thread (1.321) that is adapted so that the lag screw can be screwed into/unscrewed from the sleeve.

Preferably, the external thread (1.311) and the internal thread (1.321) of the helical section (1.3) share the same thread pitch (P), which corresponds to the thread pitch of the lag screw.

Additionally, it is preferable that the internal thread (1.321) of the helical section (1.3) shares the same type of thread as the lag screw, for example, selected from the group consisting of triangular thread, round thread and trapezoidal thread; or any other type of thread used in lag screws.

On the other hand, as shown in Figure 1, the outer projection (1.31) of the helical section (1.3) is formed by a base surface (1.312) and a side wall (1.313). The base surface (1.312) forms an angle relative to a vertical reference line that is parallel to a longitudinal axis (L) of the sleeve body (1). Wherein, the angle value (β1, β2) formed between the base surface (1.312) of the outer projection (1.31) and the vertical line progressively increases helically in the screwing-in direction (e).

Preferably, the ratio between the minimum angle value (β1) and the maximum angle value (β2) is between 0.1 and 0.67. Where the minimum angle value (β1) corresponds to the start of the helical section (1.3) following the upper cylindrical shank section (1.2) and the maximum angle value (β2) corresponds to the end of the helical section (1.3) before the lower cylindrical shank section (1.4). For example, the minimum angle value (β1) is between approximately 90° and approximately 95°, and the maximum angle value (β2) is between approximately 130° and approximately 145°.

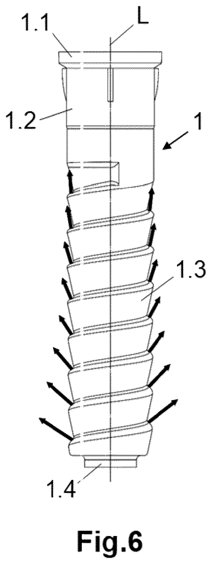

In any case, thanks to the particular configuration given to the external projection (1.31) in the form of an external thread (1.311) in the helical section (1.3), both screwing and unscrewing of the sleeve into solid ground is facilitated and, in addition, as shown in Figure 6, when the sleeve is in use, the concentration of load transmission to the concrete is also reduced, thus decreasing the possibility of cracks or fissures appearing in the concrete due to these loads.

Additionally, as shown in Figure 5, it is preferred that the helical section (1.3) comprises an upper break zone thickness (S1) substantially equal to a lower break zone thickness (S2). In any case, the minimum thickness of said upper break zone (S1) and said lower break zone (S2) should be between approximately 3 mm and approximately 3.5 mm.

Meanwhile, as shown in Figure 2, the upper cylindrical shank section (1.2) may comprise, by way of anti-rotation elements, at least one outer rib (1.21), preferably at least two, arranged parallel to the longitudinal axis (L) of the sleeve body (1). The outer rib (1.21) should preferably protrude from the outer surface of the upper cylindrical shank section (1.2) by at least 1.5 mm. Where a first side wall (1.211) of the outer rib (1.21), which is located in the direction in which the sleeve is screwed into solid ground, is arranged inclined with respect to a second, straight side wall (1.212) of said outer rib (1.21), the latter being located in the direction in which the sleeve is unscrewed. This means that, in replacement tasks, for example due to breakage of the original sleeve, the new replacement sleeve can be screwed into the solid ground to the same position as the original sleeve, maintaining its anti-rotation function.

Likewise, as shown in Figures 3 and 4, it is preferable that the inner cylindrical surface (1.22) of the upper cylindrical shank section (1.2) be smooth, i.e. without any internal projections, so that the upper cylindrical shank section (1.2) is adapted to facilitate the insertion of the lag screw into the sleeve body (1).

Meanwhile, as shown in Figure 5, it is preferable for the lower cylindrical shank section (1.4) to be formed by a hollow cylindrical wall, so that any water that may seep into the sleeve body (1) can be drained outwards.

## Claims

1. Sleeve for fixing railway rails, adapted to contain a lag screw for fixing a rail to solid ground, such as a concrete sleeper or slab track, with a substantially tubular sleeve body (1) which, in a screwing-in direction (e) of the sleeve into solid ground, comprises a crown section (1.1), an upper cylindrical shank section (1.2), a helical section (1.3) and a lower cylindrical shank section (1.4), wherein the helical section (1.3) comprises:
- an outer protrusion (1.31) in the shape of a truncated cone, configured as an external thread (1.311) which is adapted to screw/unscrew the sleeve into the solid ground; and
- an inner recess (1.32), configured as an internal thread (1.321) which is adapted to screw/unscrew the lag screw into the sleeve,
wherein, a base surface (1.312) of the outer projection (1.31) of the helical section (1.3) forms an angle with respect to a vertical line parallel to a longitudinal axis (L) of the sleeve body (1), **characterised in that** a value of the angle (β1, β2) formed between the base surface (1.312) of the outer projection (1.31) and the vertical line progressively increases helically in the screwing-in direction (e).

2. Sleeve according to claim 1, wherein a ratio between a minimum value of the angle (β1) and a maximum value of the angle (β2) is between 0.1 and 0.67.

3. Sleeve according to claim 2, wherein the minimum value of the angle (β1) is between approximately 90° and approximately 95°.

4. Sleeve according to claim 2, wherein the maximum value of the angle (β2) is between approximately 130° and approximately 145°.

5. Sleeve according to claim 1, wherein the sleeve body (1) is made of a thermoplastic material with a modulus of elasticity between approximately 3,000 MPa and approximately 5,000 MPa, under conditions of temperature between approximately 20°C and approximately 25°C, and humidity lower than 0.2%.

6. Sleeve according to claim 1, wherein the external thread (1.311) and the internal thread (1.321) of the helical section (1.3) share the same thread pitch (P) corresponding to a thread pitch of the lag screw.

7. Sleeve according to claim 1, wherein the internal thread (1.321) of the helical section (1.3) shares the same type of thread as the lag screw, selected from the group consisting of triangular thread, round thread and trapezoidal thread.

8. Sleeve according to claim 1, wherein the crown section (1.1) is adapted to couple an assembly tool for mounting the sleeve in solid ground.

9. Sleeve according to claim 8, wherein the crown section (1.1) comprises an inner wall (1.11) adapted to tightly house the assembly tool.

10. Sleeve according to claim 9, wherein the inner wall (1.11) is shaped in the form of a triangular ring.

11. Sleeve according to claim 1, wherein the crown section (1.1) comprises a truncated cone-shaped outer wall (1.12) with a first outer diameter (D1) that decreases in the screwing-in direction (e).

12. Sleeve according to claim 1, wherein the helical section (1.3) has a truncated cone-shaped outer form with a second outer diameter (D2) that decreases in the screwing-in direction (e).

13. Sleeve according to claims 11 and 12, wherein the first outer diameter (D1) of the outer wall (1.12) of the crown section (1.1) is greater than the second outer diameter (D2) of the helical section (1.3).

14. Sleeve according to claim 1, wherein the upper cylindrical shank section (1.2) comprises at least one outer rib (1.21) arranged parallel to the longitudinal axis (L) of the sleeve body (1), wherein a first side wall (1.211) of the outer rib (1.21) is arranged inclined with respect to a second straight side wall (1.212) of the outer rib (1.21).

15. Sleeve according to claim 1, wherein the helical section (1.3) comprises an upper break zone thickness (S1) which is substantially equal to a lower break zone thickness (S2), wherein a minimum thickness of said upper break zone (S1) and said lower break zone (S2) is between approximately 3 mm and approximately 3.5 mm.

## Patentansprüche

1. Hülse zur Befestigung von Eisenbahnschienen, geeignet zur Aufnahme einer Schwellenschraube zur Befestigung einer Schiene an festem Untergrund, wie beispielsweise einer Betonschwelle oder einer festen Fahrbahn, mit einem im Wesentlichen rohrförmigen Hülsenkörper (1), der in Einschraubrichtung (e) der Hülse in den festen Untergrund einen Kopfabschnitt (1.1), einen oberen zylindrischen Schaftabschnitt (1.2), einen Gewindeabschnitt (1.3) und einen unteren zylindrischen Schaftabschnitt (1.4) umfasst, wobei der Gewindeabschnitt (1.3) Folgendes umfasst:
- einen äußeren Vorsprung (1.31) in Form eines Kegelstumpfs, ausgebildet als Außengewinde (1.311), das dazu vorgesehen ist, die Hülse in den festen Untergrund ein- bzw. auszuschrauben; und
- eine innere Ausnehmung (1.32), ausgebildet als Innengewinde (1.321), das dazu vorgesehen ist, die Schwellenschraube in die Hülse ein- bzw. auszuschrauben,
wobei eine Basisfläche (1.312) des Außenvorsprungs (1.31) des Gewindeabschnitts (1.3) einen Winkel in Bezug auf eine vertikale Linie bildet, die parallel zu einer Längsachse (L) des Hülsenkörpers (1) verläuft, **dadurch gekennzeichnet, dass** sich ein Wert des Winkels (β1, β2), der zwischen der Basisfläche (1.312) des Außenvorsprungs (1.31) und der vertikalen Linie gebildet ist, in Einschraubrichtung (e) schraubenförmig fortschreitend vergrößert.

2. Hülse nach Anspruch 1, wobei ein Verhältnis zwischen einem Minimalwert des Winkels (β1) und einem Maximalwert des Winkels (β2) zwischen 0,1 und 0,67 liegt.

3. Hülse nach Anspruch 2, wobei der Minimalwert des Winkels (β1) zwischen etwa 90° und etwa 95° liegt.

4. Hülse nach Anspruch 2, wobei der Maximalwert des Winkels (β2) zwischen etwa 130° und etwa 145° liegt.

5. Hülse nach Anspruch 1, wobei der Hülsenkörper (1) aus einem thermoplastischen Material mit einem Elastizitätsmodul zwischen etwa 3.000 MPa und etwa 5.000 MPa besteht, unter Bedingungen mit einer Temperatur zwischen etwa 20 °C und etwa 25 °C und einer Feuchtigkeit von weniger als 0,2 %.

6. Hülse nach Anspruch 1, wobei das Außengewinde (1.311) und das Innengewinde (1.321) des Gewindeabschnitts (1.3) dieselbe Gewindesteigung (P) aufweisen, die einer Gewindesteigung der Schwellenschraube entspricht.

7. Hülse nach Anspruch 1, wobei das Innengewinde (1.321) des Gewindeabschnitts (1.3) denselben Gewindetyp wie die Schwellenschraube aufweist, ausgewählt aus der Gruppe bestehend aus Dreieckgewinde, Rundgewinde und Trapezgewinde.

8. Hülse nach Anspruch 1, wobei der Kopfabschnitt (1.1) dazu ausgebildet ist, ein Montagewerkzeug zum Einbau der Hülse in den festen Untergrund anzukoppeln.

9. Hülse nach Anspruch 8, wobei der Kopfabschnitt (1.1) eine Innenwand (1.11) umfasst, die dazu ausgebildet ist, das Montagewerkzeug passgenau aufzunehmen.

10. Hülse nach Anspruch 9, wobei die Innenwand (1.11) in Form eines dreieckigen Rings ausgebildet ist.

11. Hülse nach Anspruch 1, wobei der Kopfabschnitt (1.1) eine Außenwand (1.12) in Form eines Kegelstumpfs aufweist, mit einem ersten Außendurchmesser (D1), der sich in Einschraubrichtung (e) verringert.

12. Hülse nach Anspruch 1, wobei der Gewindeabschnitt (1.3) eine äußere Form in Gestalt eines Kegelstumpfs aufweist, mit einem zweiten Außendurchmesser (D2), der sich in Einschraubrichtung (e) verringert.

13. Hülse nach den Ansprüchen 11 und 12, wobei der erste Außendurchmesser (D1) der Außenwand (1.12) des Kopfabschnitts (1.1) größer ist als der zweite Außendurchmesser (D2) des Gewindeabschnitts (1.3).

14. Hülse nach Anspruch 1, wobei der obere zylindrische Schaftabschnitt (1.2) mindestens eine Außenrippe (1.21) umfasst, die parallel zu der Längsachse (L) des Hülsenkörpers (1) angeordnet ist, wobei eine erste Seitenwand (1.211) der Außenrippe (1.21) gegenüber einer zweiten geraden Seitenwand (1.212) der Außenrippe (1.21) geneigt angeordnet ist.

15. Hülse nach Anspruch 1, wobei der Gewindeabschnitt (1.3) eine obere Sollbruchzonendicke (S1) aufweist, die im Wesentlichen gleich einer unteren Sollbruchzonendicke (S2) ist, wobei eine Mindestdicke der genannten oberen Sollbruchzone (S1) und der genannten unteren Sollbruchzone (S2) zwischen etwa 3 mm und etwa 3,5 mm liegt.

## Revendications

1. Manchon destiné à la fixation de rails de chemin de fer, adapté pour recevoir une vis d'ancrage permettant de fixer un rail à un sol solide, comme une traverse en béton ou une dalle de voie, comprenant un corps de manchon (1) sensiblement tubulaire qui, dans le sens de vissage (e) du manchon dans le sol solide, comprend une section couronnée (1.1), une section de tige cylindrique supérieure (1.2), une section hélicoïdale (1.3) et une section de tige cylindrique inférieure (1.4), où la section hélicoïdale (1.3) comprend :
- une protubérance extérieure (1.31) en forme de cône tronqué, configurée comme un filetage externe (1.311) qui est adapté pour visser/dévisser le manchon dans le sol solide ; et
- une cavité intérieure (1.32), configurée comme un filetage interne (1.321) qui est adaptée pour visser/dévisser la vis d'ancrage dans le manchon,
Où une surface de base (1.312) de la saillie extérieure (1.31) de la section hélicoïdale (1.3) forme un angle par rapport à une ligne verticale parallèle à un axe longitudinal (L) du corps de manchon (1), **caractérisé en ce qu'**une valeur de l'angle (β1, β2) formé entre la surface de base (1.312) de la saillie extérieure (1.31) et la ligne verticale augmente progressivement de manière hélicoïdale dans le sens de vissage (e).

2. Manchon selon la revendication 1, où le rapport entre la valeur minimale de l'angle (β1) et la valeur maximale de l'angle (β2) est compris entre 0,1 et 0,67.

3. Manchon selon la revendication 2, où la valeur minimale de l'angle (β1) est comprise entre environ 90° et environ 95°.

4. Manchon selon la revendication 2, où la valeur maximale de l'angle (β2) est comprise entre environ 130° et environ 145°.

5. Manchon selon la revendication 1, où le corps de manchon (1) est réalisé dans un matériau thermoplastique ayant un module d'élasticité compris entre environ 3 000 MPa et environ 5 000 MPa, dans des conditions de température comprise entre environ 20 °C et environ 25 °C, et d'humidité inférieure à 0,2 %.

6. Manchon selon la revendication 1, où le filetage externe (1.311) et le filetage interne (1.321) de la section hélicoïdale (1.3) partagent le même pas de filetage (P) correspondant au pas de filetage de la vis d'ancrage.

7. Manchon selon la revendication 1, où le filetage interne (1.321) de la section hélicoïdale (1.3) partage le même type de filetage que la vis d'ancrage, choisi parmi le groupe composé d'un filetage triangulaire, un filetage rond et un filetage trapézoïdal.

8. Manchon selon la revendication 1, où la section couronnée (1.1) est adaptée pour s'accoupler à un outil de montage destiné à fixer le manchon dans un sol compact.

9. Manchon selon la revendication 8, où la section couronnée (1.1) comprend une paroi interne (1.11) adaptée pour loger étroitement l'outil de montage.

10. Manchon selon la revendication 9, où la paroi intérieure (1.11) a la forme d'un anneau triangulaire.

11. Manchon selon la revendication 1, où la section couronnée (1.1) comprend une paroi extérieure (1.12) en forme de cône tronqué ayant un premier diamètre extérieur (D1) diminuant dans la direction de vissage (e).

12. Manchon selon la revendication 1, où la section hélicoïdale (1.3) possède une forme extérieure (1.12) en forme de cône tronqué ayant un second diamètre extérieur (D2) diminuant dans la direction de vissage (e).

13. Manchon selon les revendications 11 et 12, où le premier diamètre extérieur (D1) de la paroi extérieure (1.12) de la section couronnée (1.1) est supérieur au second diamètre extérieur (D2) de la section hélicoïdale (1.3).

14. Manchon selon la revendication 1, où la section de tige cylindrique supérieure (1.2) comprend au moins une nervure extérieure (1.21) disposée parallèlement à l'axe longitudinal (L) du corps de manchon (1), où une première paroi latérale (1.211) de la nervure extérieure (1.21) est disposée de manière inclinée par rapport à une seconde paroi latérale droite (1.212) de la nervure extérieure (1.21).

15. Manchon selon la revendication 1, où la section hélicoïdale (1.3) comprend une épaisseur de zone de rupture supérieure (S1) qui est sensiblement égale à une épaisseur de zone de rupture inférieure (S2), où une épaisseur minimale de cette zone de rupture supérieure (S1) et de cette zone de rupture inférieure (S2) est comprise entre environ 3 mm et environ 3,5 mm.
